# EUROPÄISCHE PATENTSCHRIFT

(11) **EP 3 947 043 B1**
(45) Veröffentlichungstag und Bekanntmachung des Hinweises auf die Patenterteilung: **07.06.2023**
(21) Anmeldenummer: 20719580.1
(22) Anmeldetag: 01.04.2020
(51) Int. Cl.: B60R 11/02, B60N 2/22, B60N 3/00, B60N 2/68

(54) **FLEXIBLES STRUKTURBAUTEIL SOWIE VERWENDUNG**
FLEXIBLE ELEMENT OF STRUCTURE AND USE OF IT
ELEMENT DE STRUCTURE FLEXIBLE ET UTILISATION ASSOCIEE

(30) Priorität: 01.04.2019 DE 102019204614
(43) Veröffentlichungstag der Anmeldung: 09.02.2022
(73) Patentinhaber: Adient US LLC, Plymouth, MI 48170 (US)
(72) Erfinder: BAHR, Daniel, 51515 Kürten (DE); FROTZ, Thomas, 42929 Wermelskirchen (DE); HEMMELRATH, Rudolf Wilhelm, 51377 Leverkusen (DE)
(74) Vertreter: Liedhegener, Ralf
(86) Internationale Anmeldenummer: PCT/EP2020/059292
(87) Internationale Veröffentlichungsnummer: WO 2020/201374

(56) Entgegenhaltungen:
- CN-A- 101 868 168
- US-A1- 2018 298 660

## Beschreibung

Die Erfindung betrifft ein flexibles Strukturbauteil. Des Weiteren betrifft die Erfindung eine Verwendung eines solchen flexiblen Strukturbauteils und eine Sitzkomponente sowie einen Sitz.

Flexible Strukturbauteile sind allgemein bekannt und können beispielsweise für einen Sitz, insbesondere einen Fahrzeugsitz, verwendet werden.

Solche Strukturbauteile weisen meist einen faserverstärkten thermoplastischen Kunststoff mit integrierten Faserverstärkungen auf. Um den Sitz in verschiedene Positionen, wie eine Sitzkomfortposition, eine Bettposition oder eine geklappte Position zu stellen, ist der Sitz mehrteilig, zum Beispiel aus einer Rückenlehne, einem Sitzteil und einem Fußteil gebildet, die mittels Dreh- oder Rastbeschlägen drehbar miteinander verbunden sind.

Die US 2018/298660 A1 offenbart ein Strukturbauteil, umfassend eine flexible Struktur mit zumindest einem Verstellmechanismus, der aus einer Mehrzahl von Abstandselementen gebildet ist, die derart miteinander gekoppelt sind, dass deren obere Oberflächen mittels eines oberen Flächenelements und deren untere Oberflächen mittels eines unteren Flächenelements miteinander verbunden sind, wobei das obere Flächenelement und das untere Flächenelement eingerichtet sind, bei einer Neigungsbewegung der flexiblen Struktur definiert bewegt zu werden. Der Verstellmechanismus weist jedoch keine Faltelemente oder Hebelelemente auf.

Ein Strukturbauteil mit Hebelelementen, jedoch ohne Abstandselemente, ist aus der CN 101 868 168 A bekannt.

Aufgabe der Erfindung ist es, ein flexibles Strukturbauteil anzugeben, welches einfach in eine von mehreren Positionen verstellbar ist. Darüber hinaus ist es Aufgabe der Erfindung, eine Verwendung sowie eine verbesserte Sitzkomponente, bei welcher verschiedene Positionen und Abstützungsvarianten einfach einstellbar sind, und einen Sitz mit einer solchen verbesserten Sitzkomponente anzugeben.

Hinsichtlich des Strukturbauteils wird die Aufgabe durch die Merkmale des Patentanspruchs 1 gelöst. Hinsichtlich der Verwendung wird die Aufgabe durch die Merkmale des Patentanspruchs 12 gelöst. Hinsichtlich der Sitzkomponente wird die Aufgabe durch die Merkmale des Patentanspruchs 13 gelöst. Hinsichtlich des Sitzes wird die Aufgabe durch die Merkmale des Patentanspruchs 16 gelöst.

Weiterbildungen der Erfindung sind Gegenstand der abhängigen Patentansprüche.

Die Aufgabe wird erfindungsgemäß gelöst durch ein flexibles Strukturbauteil, insbesondere ein kinetisches Strukturbauteil, welches zumindest einen, insbesondere integrierten, Verstellmechanismus umfasst, der zumindest aus einer Mehrzahl von Faltelementen oder flexiblen Hebelelementen und Abstandselementen gebildet ist, die derart miteinander gekoppelt sind, dass deren obere Oberflächen mittels eines oberen Flächenelements und deren untere Oberflächen mittels eines unteren Flächenelements miteinander verbunden sind, wobei sich das obere Flächenelement und das untere Flächenelement bei einer Knick- oder Biegebewegung des Strukturbauteils definiert bewegen, insbesondere zueinander oder gegeneinander bewegen.

Die mit der Erfindung, insbesondere einer Kombination von Falt-/ Hebelelementen mit Abstandselementen als Verstellmechanismus, erzielten Vorteile bestehen insbesondere darin, dass ein beispielsweise als eine relativ dicke Verbundplatte ausgebildetes Strukturbauteil gebogen werden kann, ohne dass sich dessen Oberflächen (obere Seite und untere Seite) strecken oder dehnen. Im Weiteren werden die Ausführungsformen des Verstellmechanismus am Beispiel der Faltelemente beschrieben.

Die Erfindung verwendet dabei bekannte Wirkprinzipien von Faltelementen oder von Hebeln als Verstellelemente und lässt für die jeweils vorliegende Funktion während des Gebrauchs den einen und/oder den anderen Mechanismus optimal zur Wirkung kommen, wobei durch geschickte Konzeption und Konstruktion diverse Einzelteile in beiden Mechanismen gleichzeitig oder alternativ verwendet werden können.

In einer möglichen Ausführungsform ist der integrierte Verstellmechanismus als eine Faltkonstruktion aus mehreren Faltelementen oder Hebelelementen in Kombination mit mehreren Abstandselementen gebildet, die miteinander bewegungsgekoppelt sind.

Eine Weiterbildung sieht vor, dass das mindestens eine Faltelement als ein flächiges oder streifenförmiges Faltelement mit mindestens einem 1-Faltmechanismus oder einem Multi-Faltmechanismus ausgebildet ist. Bevorzugt ist das Faltelement als ein 2- oder 3-Faltmechanismus mit entsprechenden zwei bzw. drei Faltkanten. Die Hebelelemente können als ein 1-Gelenk- oder Multi-Gelenkmechanismus ausgebildet sein. Dabei sind die Gelenke insbesondere als Film- oder Bandgelenke ausgebildet.

Das Faltelement oder das Hebelelement ist zwischen zwei Abstandselementen oder an einem Abstandselement angeordnet. Beispielsweise sind gegenüberliegende Enden des Faltelements oder Hebelelements jeweils an einem angrenzenden oder benachbarten Abstandselement befestigt. Dabei kann das Faltelement oder Hebelelement unmittelbar oder mittelbar am Abstandselement befestigt sein.

Eine mögliche Ausführungsform sieht vor, dass die Faltelemente oder Hebelelemente in unterschiedlichen Ausrichtungen mit den Abstandselementen verbunden sind. Hierdurch können das obere Flächenelement und das untere Flächenelement in einfacher Art und Weise in Hochausrichtung (insbesondere Z-Richtung) zueinander gehalten werden.

Eine weitere Ausführungsform sieht vor, dass zwischen zwei Abstandselementen mehrere Faltelemente oder mehrere Hebelelemente angeordnet sind, die zueinander versetzt angeordnet sind. Beispielsweise können die Falt- oder Hebelelemente um 90° versetzt zueinander angeordnet sein. Insbesondere sind zumindest zwei Faltelemente oder Hebelelemente derart versetzt (oder gedreht) zueinander angeordnet, dass deren Faltkanten oder Gelenkachsen senkrecht aufeinander stehen. So können beispielsweise zwei äußere Faltelemente horizontal verlaufende Faltkanten aufweisen und ein zwischen diesen beiden äußeren Faltelementen angeordnetes mittleres Faltelement eine vertikal verlaufende Faltkante aufweisen. Hierdurch können die Flächenelemente definiert zueinander gehalten werden.

Die oberen und unteren Flächenelemente sind beispielsweise plattenförmig ausgebildet und zum Beispiel aus einem dünnen, flexiblen Material, insbesondere aus Kunststoff, zum Beispiel Polypropylen, oder aus Metall, zum Beispiel Federstahl, oder einem anderen geeigneten Material gefertigt. Insbesondere sind die oberen und unteren Flächenelemente flexibel ausgebildet. Dabei können die oberen und unteren Flächenelemente eine solche Dicke oder Materialstärke und/oder Materialbeschaffenheit/- eigenschaft aufweisen, dass diese so flexibel sind, dass diese sich dauerhaft in einem definierten Radius um mindestens 90 Grad neigen, knicken oder biegen lassen.

Das kinetische Offset ist dabei beispielsweise aus den flexiblen oberen und unteren Flächenelementen und den dazwischenliegenden Abstandselementen gebildet. Die Höhe der Abstandselemente bestimmt die eigentliche Stärke des Offsets.

In einer weiteren Ausführungsform sind die Abstandselemente jeweils zur Hälfte ihrer Anzahl abwechselnd mit dem oberen bzw. unteren Flächenelement verbunden. Dabei sind die Abstandselemente mittels der Faltelemente derart miteinander bewegungsgekoppelt, dass sich der Abstand der Abstandselemente zueinander bei einer Knick- oder Biegebewegung der flexiblen Struktur ändert.

Dabei können die Abstandselemente des jeweiligen Flächenelements durch die flexiblen Hebelelemente, insbesondere jeweils drei flexible Hebelelemente, oder drei Faltelemente miteinander verbunden sein. Die Hebelelemente oder Faltelemente können in unterschiedlicher Ausrichtung mit den Abstandselementen verbunden sein. Hierdurch können die oberen und unteren Flächenelemente in vertikaler und somit Z-Richtung zueinander gehalten werden. Wird das Strukturbauteil und damit das sogenannte Offset geneigt bzw. gebogen, bewegen sich das obere Flächenelement und das untere Flächenelement im Verhältnis zu ihrer Gesamtmaterialstärke gegeneinander. Dabei ändert sich der Abstand der Abstandselemente. Die Abstandselemente bewegen sich entweder voneinander weg oder zueinander hin. Die flexiblen Hebelelemente oder Faltelemente falten sich zusammen bzw. auseinander. Ein solch ausgebildetes Strukturbauteil ermöglicht ein relativ dickes Bauteil in Art einer Verbundplatte, welches gebogen werden kann, ohne dass sich eine der Außenoberflächen strecken oder stauchen muss.

Dabei kann die Bewegung der Abstandselemente und somit ein Biegen des Strukturbauteils gesteuert erfolgen. Zur Steuerung kann eine Motor-Getriebeeinheit in Kombination mit einer flexiblen Welle, insbesondere einer Trapez-Welle, die die Abstandselemente kraftschlüssig zueinander steuert, vorgesehen sein. Das kinetische Strukturbauteil kann in einem bestimmten Winkel oder in S-Form kraftschlüssig verformt, insbesondere gebogen, und stabil in der jeweils eingenommenen Position gehalten werden.

Ein solches Strukturbauteil mit optionaler Steuerung der Bewegung kann in unterschiedlicher Form und Größe zur Anwendung kommen, zum Beispiel für eine bewegbare Tür oder für verstellbare Trennwände oder für Sitzabstützungen eines Fahrzeug- oder Flugzeugsitzes, wie für Seitenwangen oder Lendenabstützungen, oder für eine biegsame Anzeigeeinheit oder einen Wandbildschirm oder eine Unterfederungsmatte oder einen verstellbaren Tisch oder eine verstellbare Armlehne.

In einer möglichen Ausführungsform ist das kinetische Strukturbauteil aus Kunststoff hergestellt, insbesondere durch Spritzgießen, Prägen oder im 3D-Druckverfahren hergestellt. Hierdurch können Faltkanten oder Gelenke mit sehr dünnen Stegen hergestellt werden. Die Ausbildung der flexiblen Struktur mit serieller Falt- oder Gelenkkinematik aus Kunststoff ermöglicht eine Dauerbiegewechselfestigkeit und eine hohe Zug-/Druckfestigkeit.

Insbesondere kann die flexible Struktur und/oder deren Teilbereiche in Form einer flexiblen 3D-Kunststoffstruktur im Spritzgussverfahren oder im 3D-Druckverfahren hergestellt werden. Auch ist es möglich, das gesamte kinetische Strukturbauteil mit den äußeren Flächenelementen und der zwischen diesen äußeren Flächenelementen vorgesehenen flexiblen Struktur im Spritzgussverfahren oder im 3D-Druckverfahren herzustellen.

Die Flächenelemente des Strukturbauteils sind insbesondere schalen- oder kissenförmig, zum Beispiel plattenförmig, ausgebildet. Die äußeren Flächenelemente können eine planare Form aufweisen. Alternativ können diese ergonomisch geformt und flächig ausgebildet sein.

Die mit der Erfindung erzielten Vorteile bestehen insbesondere darin, dass die flexible Struktur und damit das Strukturbauteil während der Biegung stabil, insbesondere torsionsfest, sind. Darüber hinaus erfolgt eine synchrone Auf- oder Zusammenfaltung der Falt- oder Hebelelemente über die gesamte Ausdehnung des Strukturbauteils und/oder von Teilbereichen, wodurch eine variable, flächenbezogen unterschiedliche Abstützung des Nutzers des Sitzes ermöglicht ist. Dabei ist die Expansions- oder Komprimierungsbewegung des Falt- oder Hebelmechanismus der flexiblen Struktur und/oder solch ausgebildeter Teilbereiche steuerbar und skalierbar.

Die flexible 3D-Ausgestaltung der flexiblen Struktur oder Teilbereiche dieser ermöglicht komplexe Strukturen, die einfach kontrolliert und angetrieben verformt, insbesondere gebogen oder bewegt werden können, beispielsweise zu einer Kurve oder einen Bogen expandieren.

Darüber hinaus ermöglicht die flexible Struktur aufgrund der unterschiedlichen flexiblen Ausgestaltung und Form, dass Bereiche der flexiblen Struktur in unterschiedliche Richtungen expandieren, zum Beispiel sich auffalten, oder komprimieren, zum Beispiel sich zusammenfalten.

Bei einem einen Sitz mit Fußabstützung, Sitzteil und Rückenlehne bildenden Strukturbauteil können die Fußabstützung, das Sitzteil und die Rückenlehne oder Teilbereiche dieser, wie Seitenwangenbereiche, Lordosebereich, in Form und/oder Ausmaß an verschiedenen Stellen mit der Bewegung der flexiblen Struktur verändert werden. Optional kann ein separater Antrieb vorgesehen sein, um die Expansion oder Komprimierung der flexiblen Struktur entsprechend zu steuern.

Hinsichtlich der Sitzkomponente, insbesondere einer Rückenlehne oder einem Sitzteil wird die Aufgabe erfindungsgemäß gelöst, indem die Sitzkomponente zumindest eine Tragstruktur, eine Polsterung und/oder einen Bezug sowie ein Strukturbauteil, wie zuvor beschrieben in all seinen verschiedenen Ausführungsformen, umfasst. Dabei ist zumindest eine Teilstruktur des Strukturbauteils oder das gesamte Strukturbauteil mit der Polsterung und/oder dem Bezug bewegungsgekoppelt.

In einer möglichen Ausführungsform kann das jeweilige Abstandselement mit der Polsterung und/oder dem Bezug bewegungsgekoppelt sein. Dabei kann das Strukturbauteil zwischen der Tragstruktur und der Polsterung und/oder dem Bezug angeordnet sein und zumindest einen Teilbereich der Sitzkomponente oder die gesamte Sitzkomponente bilden.

Hinsichtlich eines Sitzes wird die Aufgabe erfindungsgemäß gelöst, indem der Sitz mindestens zwei zueinander bewegliche Sitzkomponenten umfasst, von denen zumindest eine der Sitzkomponenten das zuvor in verschiedenen Ausführungsformen beschriebene Strukturbauteil aufweist. Bei einer Knick- oder Biegebewegung einer der Sitzkomponenten selbst oder einer Bewegung zumindest einer Sitzkomponenten relativ zu der anderen Sitzkomponente ist die flexible Struktur des Strukturbauteils derart eingerichtet, dass diese die Bewegung mitmacht, wobei das obere und das untere Flächenelement jeweils sich voneinander weg bewegen.

Wird das Strukturbauteil für einen Sitz, insbesondere einen Fahrzeug- oder Flugzeugsitz verwendet, wobei Teilbereiche des Sitzes oder einer der Sitzkomponenten, wie eine Lendenstütze, Seitenwangen, aus der insbesondere monolithischen flexiblen Struktur gebildet ist, so kann während einer Verstellung des Sitzes beispielsweise von einer Sitz- in eine Liegeposition die Expansion oder Komprimierung der insbesondere monolithischen flexiblen Struktur im Teilbereich des Sitzes eine entsprechende Abstützung und somit eine Anpassung an verschiedene Bedürfnisse ermöglichen. So kann das Strukturbauteil, insbesondere deren Teilstruktur oder -bereich beispielsweise derart angesteuert und bewegt werden, dass der Sitz in einer Sitz- oder Komfortposition mehr Seitenhalt aufweist als in einer Liege- oder Bettposition. Alternativ kann die flexible Struktur die gesamte Fläche des Sitzes bilden. Die Falt- oder Hebelelemente können unterhalb einer Polsterung, insbesondere einer Schaumpolsterung angeordnet sein und sich entsprechend unterhalb der Schaumpolsterung bei einer Expansion, insbesondere einem Auffalten, in Richtung der Schaumpolsterung bewegen, sich insbesondere zu einer Kurve oder Bogen und/oder linear, insbesondere in der Höhe, aufstellen oder aufspannen, und gegen die Schaumpolsterung drücken, so dass eine entsprechende Abstützung ermöglicht ist. Alternativ kann die Reihe von Expansions- oder Hebelelementen in die Schaumpolsterung integriert, insbesondere in dieser direkt angeordnet sein, und sich bei einer Expansion, insbesondere einem Auffalten, in Richtung einer Oberfläche der Schaumpolsterung bewegen, insbesondere zu einer Kurve oder einem Bogen und/oder linear, insbesondere in der Höhe, aufstellen oder aufspannen.

Ausführungsbeispiele der Erfindung werden anhand von Zeichnungen näher erläutert. Dabei zeigen:
- Figur 1: schematisch ein flexibles Strukturbauteil in Explosionsdarstellung,
- Figur 2: schematisch ein flexibles Strukturbauteil in perspektivischer Darstellung,
- Figuren 3 und 4: schematisch das flexible Strukturbauteil in verschiedenen Darstellungen,
- Figuren 5A und 5B: schematisch eine weitere Ausführungsform für ein flexibles Strukturbauteil,
- Figuren 6A bis 6C: schematisch eine Ausführungsform eines eine Sitzkomponente bildenden flexiblen Strukturbauteils,
- Figuren 7A bis 8C: schematisch eine Ausführungsform eines eine Lampe bildenden flexiblen Strukturbauteils,
- Figur 9: schematisch eine Ausführungsform für eine Antriebseinheit eines verstellbaren flexiblen Strukturbauteils,
- Figur 10: schematisch ein flexibles Strukturbauteil in einer eingestellten gebogenen Position,
- Figuren 11 bis 12: schematisch eine Ausführungsform eines eine Sitzkomponente bildenden flexiblen Strukturbauteils,
- Figuren 13 bis 14: schematisch eine Ausführungsform eines eine Anzeigeeinheit bildenden flexiblen Strukturbauteils,
- Figur 15: schematisch eine Ausführungsform eines eine Sitzkomponente bildenden flexiblen Strukturbauteils, und
- Figuren 16 bis 17: schematisch eine Ausführungsform eines einen verstellbaren Tisch bildenden flexiblen Strukturbauteils.

Einander entsprechende Teile sind in allen Figuren mit den gleichen Bezugszeichen versehen.

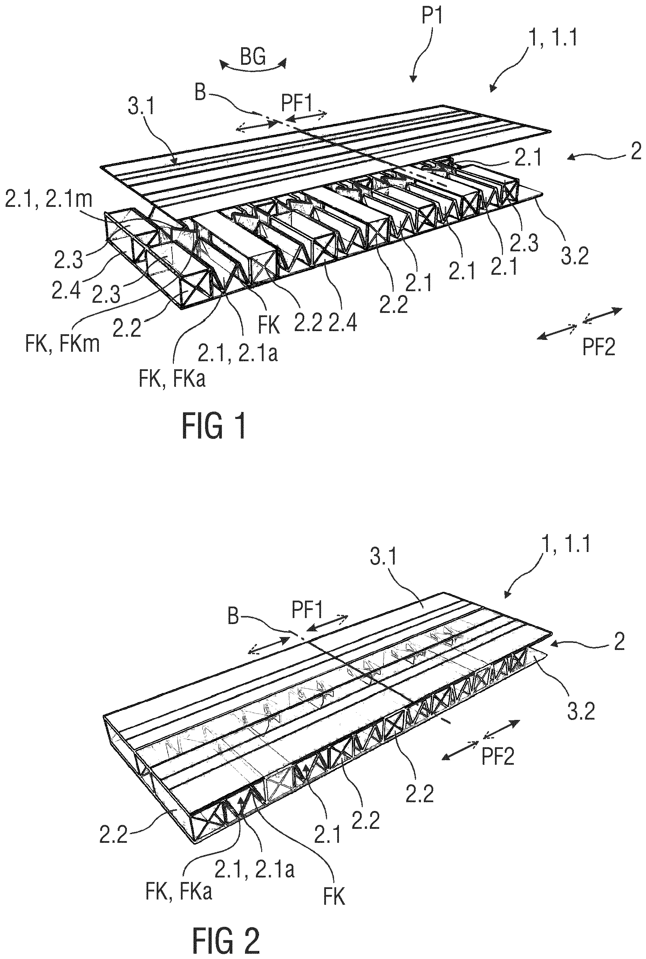

**Figur 1** zeigt schematisch ein Strukturbauteil 1 in Explosionsdarstellung in einer flachen Position oder Bettposition P1. **Figur 2** zeigt das Strukturbauteil 1 in perspektivischer Darstellung.

Das Strukturbauteil 1 ist als ein kinetisches Strukturbauteil ausgebildet. Das Strukturbauteil 1 umfasst einen Verstellmechanismus 2, der zumindest aus einer Mehrzahl von Hebelelementen oder Faltelementen 2.1 und Abstandselementen 2.2 gebildet ist, die derart miteinander bewegungsgekoppelt sind, dass deren obere Oberflächen 2.3 mittels eines oberen Flächenelements 3.1 und deren untere Oberflächen 2.4 mittels eines unteren Flächenelements 3.2 miteinander verbunden sind, wobei sich das obere Flächenelement 3.1 und das untere Flächenelement 3.2 bei einer Biegebewegung des Strukturbauteils 1 definiert bewegen. So bewegen sich beispielsweise Teilbereiche 3.1 des oberen Flächenelements 3.1 bei einer Biege- oder Neigungsbewegung BG um eine Biegeachse B definiert zueinander gemäß Pfeile PF1 und Teilbereiche des unteren Flächenelements 3.2 gegeneinander gemäß Pfeile PF2 bewegen.

Die oberen und unteren Flächenelemente 3.1, 3.2 sind beispielsweise plattenförmig ausgebildet. Insbesondere sind die oberen und unteren Flächenelemente 3.1, 3.2 flexibel ausgebildet. Insbesondere sind das obere Flächenelement 3.1 und das untere Flächenelement 3.2 jeweils aus einem solchen flexiblen Material und/oder einer solchen Materialdicke gebildet, dass diese jeweils in einem definierten Radius um mindestens 90 Grad verbiegbar oder neigbar sind. Zum Beispiel sind das obere Flächenelement 3.1 und das untere Flächenelement 3.2 jeweils aus einem dünnen, flexiblen Material, insbesondere aus Kunststoff, zum Beispiel Polypropylen, oder aus Metall, zum Beispiel Federstahl, oder einem anderen geeigneten Material gefertigt.

Das Strukturbauteil 1 umfasst eine flexible Struktur 1.1 mit dem zumindest einen integrierten Verstellmechanismus 2. Der Verstellmechanismus 2 ist insbesondere als ein Faltwerk oder Hebelgelenkwerk ausgebildet. Der Verstellmechanismus 2 kann dabei als Verstellelemente Falt- oder Hebelelemente 2.1 verwenden.

Der integrierte Verstellmechanismus 2 als eine Faltkonstruktion aus mehreren Faltelementen oder Hebelelementen 2.1 und mehreren Abstandselementen 2.2 gebildet ist, die miteinander bewegungsgekoppelt sind.

Im Weiteren wird die Erfindung anhand von Faltelementen 2.1 näher beschrieben:
Dabei sind die Faltelemente 2.1 jeweils als ein flächiges oder streifenförmiges Faltelement 2.1 mit mindestens einem 1-Faltmechanismus oder einem Multi-Faltmechanismus ausgebildet.

Zumindest ein oder mehrere Faltelemente 2.1 ist bzw. sind zwischen zwei Abstandselementen 2.2 angeordnet. Dabei können zwischen zwei Abstandselementen 2.2 mehrere Faltelemente 2.1 zueinander versetzt angeordnet sein. Beispielsweise sind zumindest zwei Faltelemente 2.1 derart versetzt zueinander angeordnet sind, dass deren Faltkanten FK senkrecht aufeinander stehen.

**Figur 1** zeigt beispielsweise als Abstandselemente 2.2 längliche Hohl- oder Profilelemente. Zwischen zwei, solch länglicher Abstandselemente 2.2 sind jeweils drei Faltelemente 2.1 nebeneinander entlang der Erstreckung der Abstandselemente 2.2 angeordnet. Dabei sind zwei äußere Faltelemente 2.1a als ein 2-Faltmechanismus mit einer horizontalen Faltkante FKa, die parallel zur Erstreckung der Abstandselemente 2.2 ausgebildet. Ein weiteres, mittleres Faltelement 2.1m ist zwischen den beiden äußeren Faltelementen 2.1a angeordnet und als ein 2-Faltmechanismus mit einer vertikalen Faltkante FKm, die senkrecht zur horizontalen Faltkante FKa verläuft.

Die Faltelemente 2.1 können unmittelbar oder mittelbar mit den Abstandselementen 2.2 verbunden sein. Darüber hinaus können die Faltelemente 2.1 in unterschiedlichen Ausrichtungen mit den Abstandselementen 2.2 verbunden sein.

Insbesondere sind die Abstandselemente 2.2 mittels der Faltelemente 2.1 miteinander bewegungsgekoppelt, wobei sich der Abstand der Abstandselemente 2.2 zueinander bei einer Neigungsbewegung BG, in insbesondere einer Knick- oder Biegebewegung, der flexiblen Struktur 1.1 ändert.

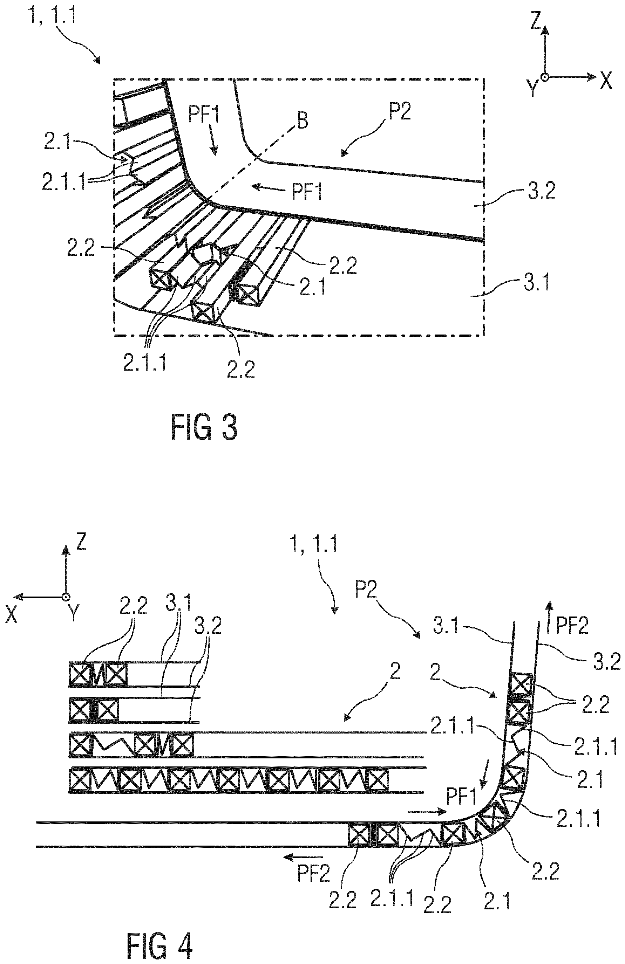

**Figuren 3 und 4** zeigen schematisch das Strukturbauteil 1 in verschiedenen Darstellungen und in einer gebogenen Position P2. Dabei können die oberen und unteren Flächenelemente 3.1, 3.2 eine solche Dicke oder Materialstärke und/oder Materialbeschaffenheit/-eigenschaft aufweisen, dass diese so flexibel sind, dass diese sich dauerhaft in einem definierten Radius um mindestens 90 Grad neigen oder biegen lassen.

Das kinetische Offset und damit das kinetische Strukturbauteil 1 ist dabei beispielsweise aus den flexiblen oberen und unteren Flächenelementen 3.1 und 3.2 und den dazwischenliegenden Abstandselementen 2.2 gebildet. Die Höhe der Abstandselemente 2.2 bestimmt die eigentliche Stärke des Offsets und damit des Strukturbauteils 1.

In einer weiteren Ausführungsform, wie in **Figur 4** gezeigt, sind die Abstandselemente 2.2 jeweils zur Hälfte ihrer Anzahl abwechselnd mit dem oberen Flächenelement 3.1 bzw. dem unteren Flächenelement 3.2 oder umgekehrt verbunden.

Dabei können die Abstandselemente 2.2 des jeweils zugehörigen Flächenelements 3.1 oder 3.2, mit welchem die Abstandselemente 2.2 verbunden sind, durch flexible Falt- oder Hebelelemente 2.1.1, insbesondere jeweils drei flexible Falt- oder Hebelelemente 2.1.1, miteinander verbunden sein.

Die Falt- oder Hebelelemente 2.1 können in unterschiedlicher Ausrichtung mit den Abstandselementen 2.2 verbunden sein. Hierdurch können das obere Flächenelement 3.1 und das untere Flächenelement 3.2 in vertikaler und somit Z-Richtung zueinander gehalten werden. Wird das Strukturbauteil 1 und damit das sogenannte Offset geneigt bzw. gebogen, bewegen sich das obere Flächenelement 3.1 und das untere Flächenelement 3.2 im Verhältnis zu ihrer Gesamtmaterialstärke gegeneinander. Dabei ändert sich der Abstand der Abstandselemente 2.2. Die Abstandselemente 2.2 bewegen sich entweder voneinander weg oder zueinander hin. Die flexiblen Falt- oder Hebelelemente 2.1.1 falten sich entsprechend zusammen bzw. auseinander. Ein solch ausgebildetes Strukturbauteil 1 ermöglicht ein relativ dickes Bauteil in Art einer Verbundplatte, welches gebogen werden kann, ohne dass sich eine der Außenoberflächen strecken oder stauchen muss.

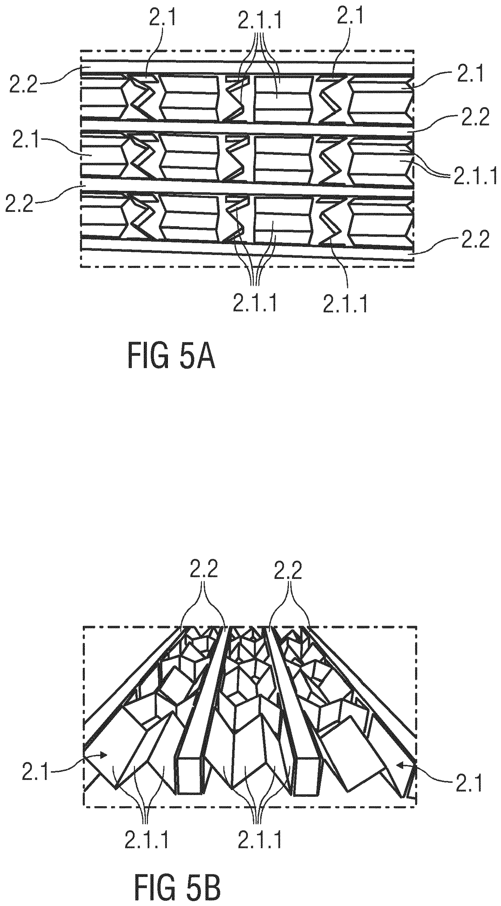

**Figuren 5A und 5B** zeigen schematisch das flexible Strukturbauteil 1 mit langgestreckten Abstandselementen 2.2, wobei jeweils zwei Abstandselemente 2.2 über die gesamte Länge mittels mehrerer Falt- oder Hebelelemente 2.1 beweglich voneinander beabstandet sind. Dabei ist das jeweilige Falt- oder Hebelelement 2.1 als ein flexibles Falt- oder Hebelelement 2.1.1 ausgebildet. Beispielsweise ist das flexible Falt- oder Hebelelement 2.1.1 als ein gefaltetes oder ziehharmonikaförmiges Element mit drei Hebeln gebildet. Darüber hinaus sind die flexiblen Falt- oder Hebelelemente 2.1.1 zwischen zwei Abstandselementen 2.2 jeweils abwechselnd unterschiedlich ausgerichtet, insbesondere um 90° zueinander gedreht. Hierdurch können das obere Flächenelement 3.1 und das untere Flächenelement 3.2 zueinander in Z-Richtung gehalten werden.

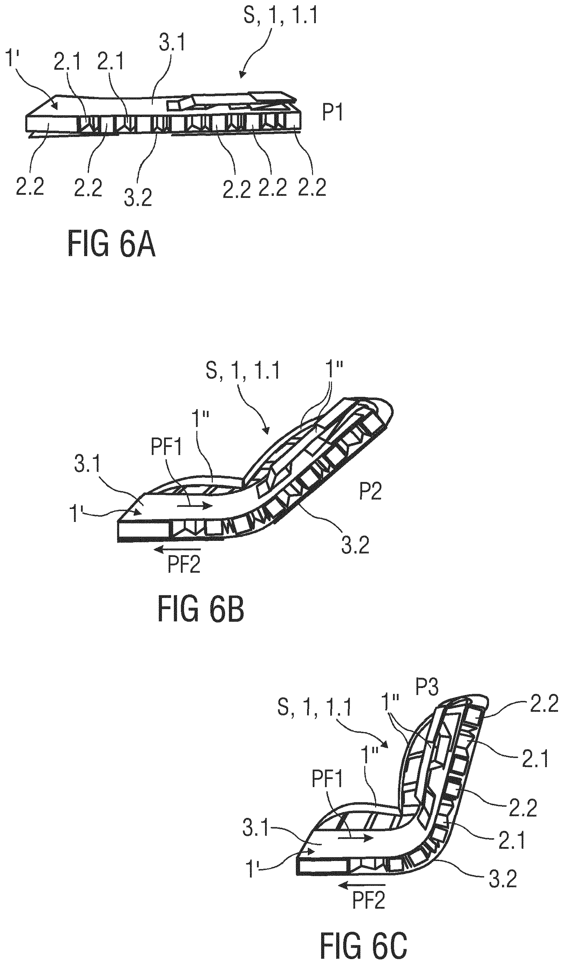

**Figuren 6A bis 6C** zeigen schematisch eine Anwendung des zuvor beschriebenen Strukturbauteils 1 für eine Sitzkomponente eines Sitzes S in verschiedenen Positionen P1 bis P3, wobei P1 eine Bettposition, P2 eine geneigte Position und P3 eine Sitzposition darstellt.

Der Sitz S umfasst das Strukturbauteil 1, welches als ein monolithisches, variabel einstellbares Strukturbauteil 1' das Sitzteil und die Rückenlehne des Sitzes S bildet. Zusätzlich können weitere Strukturbauteile 1" auf dem monolithischen Strukturbauteil 1' angeordnet oder mit diesem als ein einziges monolithisches Bauteil ausgebildet sein. Das oder diese weiteren Strukturbauteile 1" bilden ein oder mehrere variabel einstellbare Abstützbereiche, insbesondere eine variabel einstellbare Rückenabstützung und/oder Seitenabstützung. Dabei können mehrere Abstützbereiche bei einem Neigen des monolithischen Strukturbauteils 1' synchron verstellt werden, insbesondere synchron expandieren oder komprimieren. Alternativ oder zusätzlich können einzelne Abstützbereiche separat verstellt, insbesondere expandiert oder komprimiert, werden.

Das Strukturbauteil 1 kann dabei Teil einer Polsterung sein oder die Polsterung des Sitzes S bilden. Das Strukturbauteil 1 ist an einer nicht näher dargestellten Tragstruktur angeordnet. Dabei ist das Strukturbauteil 1 mit der Polsterung und/oder dem Bezug bewegungsgekoppelt.

Bei einer Neigungsbewegung BG der Rückenlehne relativ zum Sitzteil, wie in **Figuren 6B und 6C** gezeigt, ist die flexible Struktur 1.1 des Strukturbauteils 1 derart eingerichtet, dass diese die Bewegung mitmacht, wobei das obere Flächenelement 3.1 und das untere Flächenelement 3.2 sich definiert bewegen. Insbesondere bewegen sich diese voneinander weg gemäß Pfeile PF1 und PF2. Dadurch ist eine Stauchung oder Streckung der Flächenelemente 3.1 und 3.2 vermieden und eine faltenfreie Oberfläche ermöglicht.

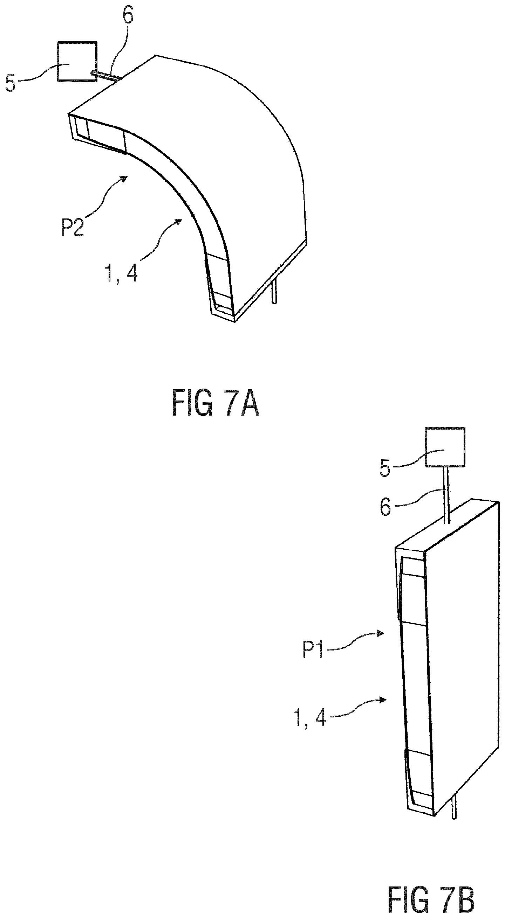

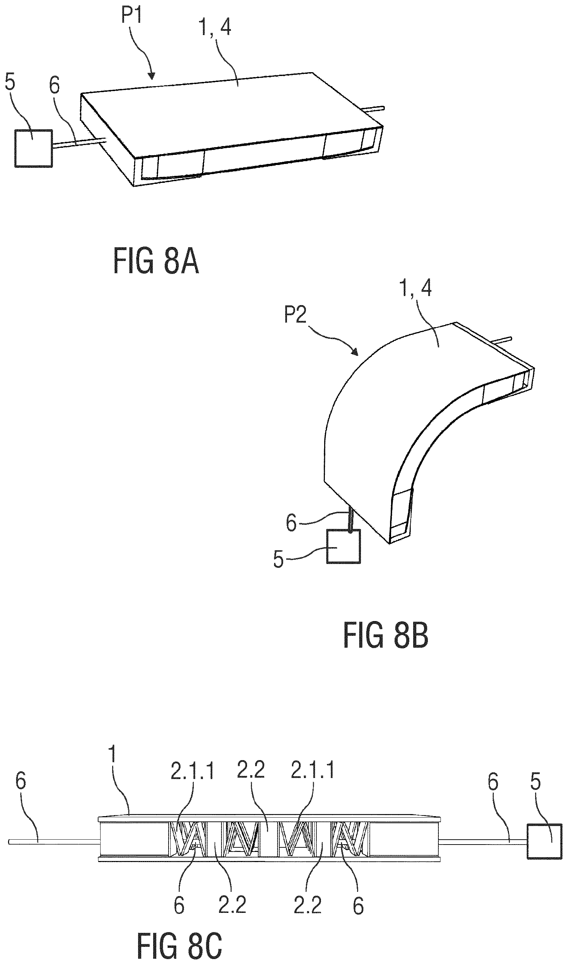

**Figuren 7A bis 8C** zeigen schematisch eine Anwendung des zuvor beschriebenen flexiblen Strukturbauteils 1 für eine Lampe 4 in verschiedenen eingestellten Position P1 bis P2, wobei P1 eine senkrechte Position und P2 eine um 90° geneigte Position darstellt.

Dabei kann die Bewegung der Abstandselemente 2.2 und somit ein Biegen des Strukturbauteils 1 gesteuert erfolgen. Zur Steuerung kann eine Motor-Getriebeeinheit 5 in Kombination mit einer flexiblen Welle 6, insbesondere einer Trapez-Welle, vorgesehen sein. Die Motor-Getriebeeinheit 5 ist mittels der Welle 6 mit den Abstandselementen 2.2 bewegungsgekoppelt und steuert diese kraftschlüssig zueinander, so dass das kinetische Strukturbauteil 1 in einem bestimmten Winkel oder in Kurven- oder BogenForm, insbesondere einer S-Form, kraftschlüssig verformt, insbesondere gebogen, werden kann und stabil in der jeweils eingenommenen gebogenen Position P2 gehalten werden kann.

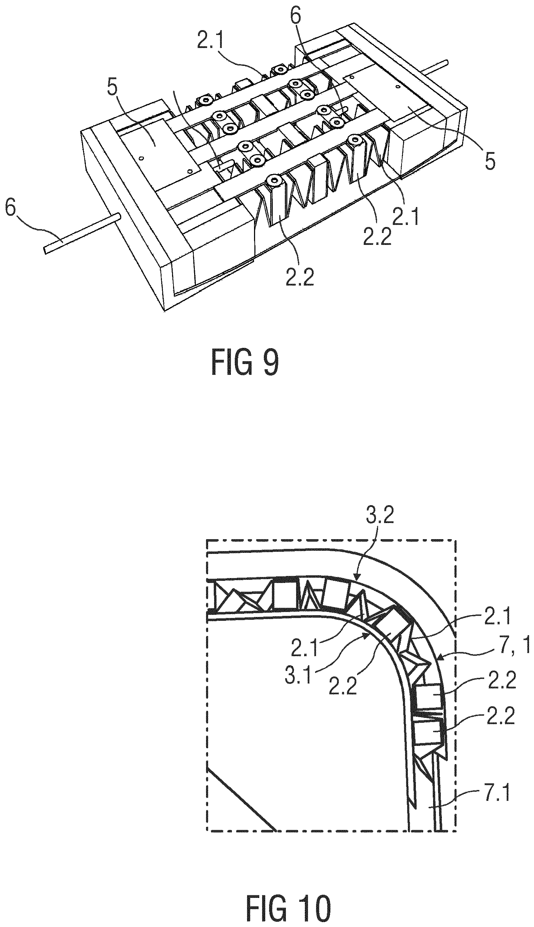

**Figur 9** zeigt eine weitere Ausführungsform für ein flexibles Strukturbauteil 1 mit zwei Motor-Getriebeeinheiten 5, die jeweils an einem Längsende des Strukturbauteils 1 angeordnet sind. Von jeder Motor-Getriebeeinheit 5 geht eine Welle 6 ab, welche jeweils mit einer Anzahl von nächstgelegenen Abstandselementen 2.2 bewegungsgekoppelt ist.

Ein solches Strukturbauteil 1 mit optionaler Steuerung der Bewegung kann in unterschiedlicher Form und Größe zur Anwendung kommen, zum Beispiel für eine bewegbare Tür oder für verstellbare Trennwände 7, wie in **Figur 10** gezeigt. Bei einer bewegbaren Tür oder bewegbaren Trennwänden 7 kann die Steuerung in einer Führungsschiene 7.1 oder Laufschiene erfolgen, wodurch eine geschlossene Oberfläche und ein stabiler Aufbau ermöglicht sind. Eine solche Tür kann einfach gereinigt und kaschiert werden, zum Beispiel mit Stoff, Leder oder Schaum.

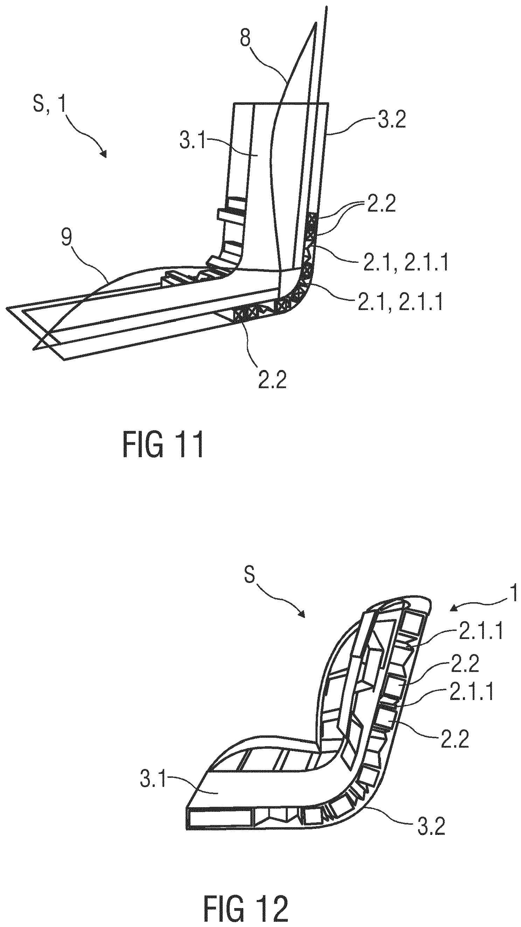

**Figuren 11 bis 12** zeigen schematisch eine Anwendung des zuvor beschriebenen flexiblen Strukturbauteils 1 für einen Sitz S. Dabei kann das Strukturbauteil 1 nur einen Teilbereich des Sitzes S, zum Beispiel eine Seitenwangen 8 oder Sitzabstützungen 9 bilden. Dabei können die Abstandselemente 2.2 einzeln oder gruppenweise angesteuert werden, um eine bogenförmige Abstützung zu erzielen. Das Strukturbauteil 1 kann im Schaumpolster oder unterhalb der Polsterung angeordnet sein. Dabei können die Abstandselemente 2.2, auch kinetische Zellen oder "morphing surface" genannt, über die gesamte Oberfläche angesteuert werden, so dass allein durch die Verformung, insbesondere Neigung des Strukturbauteils 1, zum Beispiel einer Lehne, daraus resultierende Verschiebewege genutzt werden können, um eine Oberflächenveränderung (morphing) zu erzeugen. Alternativ können auch einzelne Segmente oder Abstandselemente 2.2 unabhängig voneinander elektrisch angesteuert werden.

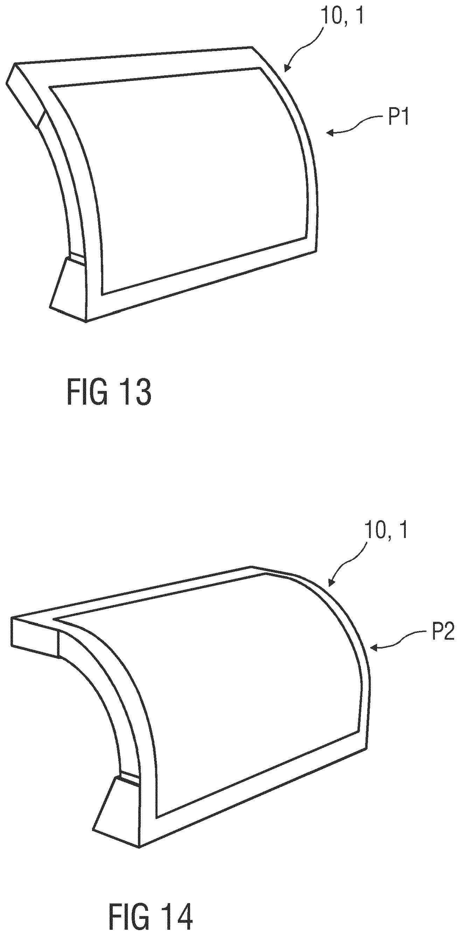

**Figuren 13 bis 14** zeigen schematisch eine Anwendung des zuvor beschriebenen flexiblen Strukturbauteils 1 für eine Anzeigeeinheit 10 in verschiedenen eingestellten Positionen P1 bis P2, wobei P1 eine leicht geneigte Position, P2 eine um eine stärker geneigte Position darstellt. Das flexible Strukturbauteil 1 kann mit einer Anzeigeeinheit 10 für eine biegsame Anzeige oder eine Folienanzeige kombiniert, insbesondere verbunden und entsprechend gesteuert werden. Hierdurch sind gewölbte Anzeigen, zum Beispiel für ein Overheaddisplay oder einen Wandbildschirm, ermöglicht.

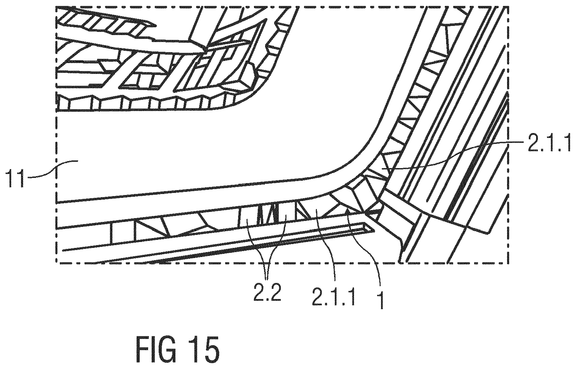

**Figur 15** zeigt schematisch eine Anwendung des zuvor beschriebenen flexiblen Strukturbauteils 1 für eine Unterfederungsmatte 11. Dabei wird das Strukturbauteil 1 als steuerbare Unterfederungsmatte 11 genutzt, um eine mechanische Verbindung zwischen Sitzkissen und Lehne herzustellen.

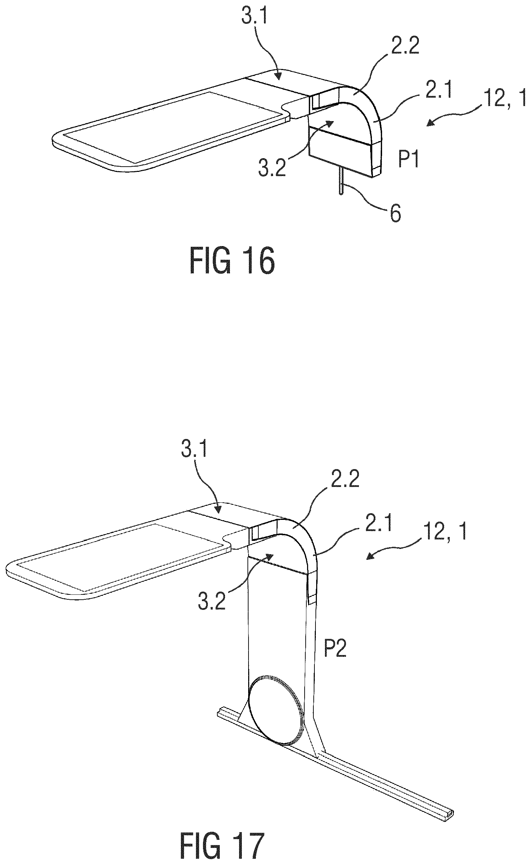

**Figuren 16 bis 17** zeigen eine Anwendung des zuvor beschriebenen flexiblen Strukturbauteils 1 für einen elektrisch verstellbaren Tisch 12 in verschiedenen eingestellten Positionen P1 bis P2, wobei P1 eine leicht geneigte Position, P2 eine stärker geneigte Position darstellt.

### Bezugszeichenliste

- 1, 1', 1": Strukturbauteil
- 1.1: flexible Struktur
- 2: Verstellmechanismus
- 2.1: Falt- oder Hebelelement
- 2.1a: äußeres Faltelement
- 2.1m: mittleres Faltelement
- 2.1.1: flexibles Hebelelement
- 2.2: Abstandselement
- 2.3: Obere Oberfläche
- 2.4: Untere Oberfläche
- 3.1: Oberes Flächenelement
- 3.2: Unteres Flächenelement
- 4: Lampe
- 5: Motor-Getriebeeinheit
- 6: Welle
- 7: Trennwand
- 7.1: Führungsschiene
- 8: Seitenwange
- 9: Sitzabstützung
- 10: Anzeigeeinheit
- 11: Unterfederungsmatte
- 12: Tisch

- 13 B: Biegeachse
- BG: Neigungsbewegung
- FK: Faltkante
- FKa: horizontale Faltkante
- FKm: vertikale Faltkante
- PF1, PF2: Pfeile
- P1 bis P3: Position
- S: Sitz

## Patentansprüche

1. Strukturbauteil (1, 1'), umfassend:
- eine flexible Struktur (1.1) mit zumindest einem Verstellmechanismus (2),
der zumindest aus einer Mehrzahl von Faltelementen (2.1a, 2.1m) oder Hebelelementen (2.1) und
Abstandselementen (2.2) gebildet ist,
die derart miteinander gekoppelt sind, dass deren obere Oberflächen mittels eines oberen Flächenelements (3.1) und deren untere Oberflächen mittels eines unteren Flächenelements (3.2) miteinander verbunden sind,
wobei das obere Flächenelement (3.1) und das untere Flächenelement (3.2) eingerichtet sind, bei einer Neigungsbewegung (BG) der flexiblen Struktur (1.1) definiert bewegt zu werden.

2. Strukturbauteil (1, 1') nach Anspruch 1, wobei der Verstellmechanismus (2) als eine Faltkonstruktion aus mehreren Faltelementen (2.1a, 2.1m) oder Hebelelementen (2.1) und mehreren Abstandselementen (2.2) gebildet ist, die miteinander bewegungsgekoppelt sind.

3. Strukturbauteil (1, 1') nach Anspruch 1 oder 2, wobei das mindestens eine Faltelement (2.1a, 2.1m) als ein flächiges oder streifenförmiges Faltelement mit mindestens einem 1-Faltmechanismus oder einem Multi-Faltmechanismus ausgebildet ist.

4. Strukturbauteil (1, 1') nach einem der vorhergehenden Ansprüche, wobei das Faltelement (2.1a, 2.1m) zwischen zwei Abstandselementen (2.2) oder an einem Abstandselement (2.2) angeordnet ist.

5. Strukturbauteil (1, 1') nach einem der vorhergehenden Ansprüche, wobei die Faltelemente (2.1a, 2.1m) oder Hebelelemente (2.1) in unterschiedlichen Ausrichtungen mit den Abstandselementen (2.2) verbunden sind.

6. Strukturbauteil (1, 1') nach einem der vorhergehenden Ansprüche, wobei zwischen zwei Abstandselementen (2.2) mehrere Faltelemente (2.1a, 2.1m) oder Hebelelemente (2.1) angeordnet sind, die zueinander versetzt angeordnet sind.

7. Strukturbauteil (1, 1') nach Anspruch 6, wobei zumindest zwei Faltelemente (2.1a, 2.1m) oder Hebelelemente (2.1) derart versetzt zueinander angeordnet sind, dass deren Faltkanten (FK) bzw. Gelenkachsen senkrecht aufeinander stehen.

8. Strukturbauteil (1, 1') nach einem der vorhergehenden Ansprüche, wobei das oder die Abstandselemente (2.2) als Hohl- und/oder Profilelemente ausgebildet ist bzw. sind.

9. Strukturbauteil (1, 1') nach einem der vorhergehenden Ansprüche, wobei die Abstandselemente (2.2) mittels der Faltelemente (2.1a, 2.1m) oder Hebelelemente (2.2) miteinander bewegungsgekoppelt sind.

10. Strukturbauteil (1, 1') nach einem der vorhergehenden Ansprüche, wobei sich der Abstand der Abstandselemente (2.2) zueinander bei einer Neigungsbewegung (BG) der flexiblen Struktur (1.1) ändert.

11. Strukturbauteil (1, 1') nach einem der vorhergehenden Ansprüche, wobei das obere Flächenelement (3.1) und das untere Flächenelement (3.2) jeweils aus einem solchen flexiblen Material und/oder einer solchen Materialdicke gebildet sind, dass diese jeweils in einem definierten Radius um mindestens 90 Grad verbiegbar oder neigbar sind.

12. Verwendung eines Strukturbauteils (1, 1') nach einem der vorhergehenden Ansprüche als ein bewegliches Bauteil, insbesondere eine bewegbare Tür, eine verstellbare Trennwand, einen verstellbaren Sitz (S) mit oder ohne eine verstellbare Kontur, einen Sitz (S) mit einer verstellbaren Kontur, eine bewegliche Anzeigeeinheit (10), einen beweglichen Bildschirm, einen verstellbaren Tisch (12), eine verstellbare Armlehne, eine verstellbare Lampe (4).

13. Sitzkomponente, insbesondere Rückenlehne oder Sitzteil, wobei die Sitzkomponente zumindest:
- eine Tragstruktur,
- eine Polsterung und/oder ein Bezugselement sowie
- ein Strukturbauteil (1, 1') nach einem der vorhergehenden Ansprüche 1 bis 11 umfasst.

14. Sitzkomponente nach Anspruch 13, wobei das Strukturbauteil (1, 1'), insbesondere das obere Flächenelement (3.1) mit der Polsterung und/oder dem Bezugselement bewegungsgekoppelt ist.

15. Sitzkomponente nach Anspruch 13 oder 14, wobei das Strukturbauteil (1, 1') zwischen der Tragstruktur und der Polsterung und/oder dem Bezugselement angeordnet ist.

16. Sitz (S), umfassend mindestens zwei relativ zueinander bewegliche Sitzkomponenten, von denen zumindest eine der Sitzkomponenten ein Strukturbauteil (1, 1') nach einem der Ansprüche 1 bis 11 umfasst.

## Claims

1. Structural component (1, 1') comprising:
- a flexible structure (1.1) having at least one adjusting mechanism (2)
which is formed at least from a plurality of folding elements (2.1a, 2.1m) or lever elements (2.1) and
spacer elements (2.2)
which are coupled together such that their upper surfaces are connected together by an upper surface element (3.1) and their lower surfaces are connected together by a lower surface element (3.2), wherein the upper surface element (3.1) and the lower surface element (3.2) are set up to move in a defined manner in the event of an inclination movement (BG) of the flexible structure (1.1).

2. Structural component (1, 1') according to Claim 1, wherein the adjusting mechanism (2) is formed as a folded construction made up of a plurality of folding elements (2.1a, 2.1m) or lever elements (2.1) and a plurality of spacer elements (2.2) that are coupled together in terms of movement.

3. Structural component (1, 1') according to Claim 1 or 2, wherein the at least one folding element (2.1a, 2.1m) is configured as an extensive or strip-like folding element with at least a 1-fold mechanism or a multi-fold mechanism.

4. Structural component (1, 1') according to one of the preceding claims, wherein the folding element (2.1a, 2.1m) is arranged between two spacer elements (2.2) or against one spacer element (2.2).

5. Structural component (1, 1') according to one of the preceding claims, wherein the folding elements (2.1a, 2.1m) or lever elements (2.1) are connected to the spacer elements (2.2) in different orientations.

6. Structural component (1, 1') according to one of the preceding claims, wherein a plurality of folding elements (2.1a, 2.1m) or lever elements (2.1), which are arranged in an offset manner with respect to one another, are arranged between two spacer elements (2.2).

7. Structural component (1, 1') according to Claim 6, wherein at least two folding elements (2.1a, 2.1m) or lever elements (2.1) are arranged in an offset manner with respect to one another such that their folded edges (FK) or joint axes are perpendicular to one another.

8. Structural component (1, 1') according to one of the preceding claims, wherein the spacer element(s) (2.2) is/are configured as hollow and/or profile elements.

9. Structural component (1, 1') according to one of the preceding claims, wherein the spacer elements (2.2) are coupled together in terms of movement by the folding elements (2.1a, 2.1m) or lever elements (2.2).

10. Structural component (1, 1') according to one of the preceding claims, wherein the mutual spacing of the spacer elements (2.2) changes in the event of an inclination movement (BG) of the flexible structure (1.1) .

11. Structural component (1, 1') according to one of the preceding claims, wherein the upper surface element (3.1) and the lower surface element (3.2) are each formed from such a flexible material and/or with such a material thickness that they are each able to be bent or inclined in a defined radius through at least 90 degrees.

12. Use of a structural component (1, 1') according to one of the preceding claims as a movable component, in particular a movable door, an adjustable partition wall, an adjustable seat (S) with or without an adjustable contour, a seat (S) with an adjustable contour, a movable display unit (10), a movable display screen, an adjustable table (12), an adjustable armrest, an adjustable lamp (4).

13. Seat component, in particular backrest or seating part, wherein the seat component comprises at least:
- a supporting structure,
- padding and/or a cover element, and
- a structural component (1, 1') according to one of the preceding Claims 1 to 11.

14. Seat component according to Claim 13, wherein the structural component (1, 1'), in particular the upper surface element (3.1), is coupled in terms of movement to the padding and/or the cover element.

15. Seat component according to Claim 13 or 14, wherein the structural component (1, 1') is arranged between the supporting structure and the padding and/or the cover element.

16. Seat (S) comprising at least two seat components that are movable relative to one another, of which at least one of the seat components comprises a structural component (1, 1') according to one of Claims 1 to 11.

## Revendications

1. Composant structurel (1, 1'), comprenant :
- une structure flexible (1.1) avec au moins un mécanisme de réglage (2),
qui est formé au moins d'une pluralité d'éléments de pliage (2.1a, 2.1m) ou d'éléments de levier (2.1) et
d'éléments d'écartement (2.2),
qui sont couplés les uns aux autres de telle sorte que leurs surfaces supérieures sont reliées les unes aux autres au moyen d'un élément de surface supérieur (3.1) et leurs surfaces inférieures sont reliées les unes aux autres au moyen d'un élément de surface inférieur (3.2), l'élément de surface supérieur (3.1) et l'élément de surface inférieur (3.2) étant adaptés pour être déplacés de manière définie lors d'un mouvement d'inclinaison (BG) de la structure flexible (1.1).

2. Composant structurel (1, 1') selon la revendication 1, dans lequel le mécanisme de réglage (2) est formé sous la forme d'une construction de pliage composée de plusieurs éléments de pliage (2.1a, 2.1m) ou éléments de levier (2.1) et de plusieurs éléments d'écartement (2.2), qui sont couplés en mouvement les uns avec les autres.

3. Composant structurel (1, 1') selon la revendication 1 ou 2, dans lequel l'au moins un élément de pliage (2.1a, 2.1m) est réalisé sous la forme d'un élément de pliage plat ou en forme de bande avec au moins un mécanisme à 1 pli ou un mécanisme à plusieurs plis.

4. Composant structurel (1, 1') selon l'une quelconque des revendications précédentes, dans lequel l'élément de pliage (2.1a, 2.1m) est agencé entre deux éléments d'écartement (2.2) ou sur un élément d'écartement (2.2).

5. Composant structurel (1, 1') selon l'une quelconque des revendications précédentes, dans lequel les éléments de pliage (2.1a, 2.1m) ou les éléments de levier (2.1) sont reliés aux éléments d'écartement (2.2) dans des orientations différentes.

6. Composant structurel (1, 1') selon l'une quelconque des revendications précédentes, dans lequel plusieurs éléments de pliage (2.1a, 2.1m) ou éléments de levier (2.1), qui sont agencés en décalage les uns par rapport aux autres, sont agencés entre deux éléments d'écartement (2.2) .

7. Composant structurel (1, 1') selon la revendication 6, dans lequel au moins deux éléments de pliage (2.1a, 2.1m) ou éléments de levier (2.1) sont agencés en décalage l'un par rapport à l'autre de telle sorte que leurs arêtes de pliage (FK) ou axes d'articulation sont perpendiculaires entre eux.

8. Composant structurel (1, 1') selon l'une quelconque des revendications précédentes, dans lequel le ou les éléments d'écartement (2.2) est ou sont réalisés sous forme d'éléments creux et/ou profilés.

9. Composant structurel (1, 1') selon l'une quelconque des revendications précédentes, dans lequel les éléments d'écartement (2.2) sont couplés en mouvement entre eux au moyen des éléments de pliage (2.1a, 2.1m) ou des éléments de levier (2.2).

10. Composant structurel (1, 1') selon l'une quelconque des revendications précédentes, dans lequel l'écartement des éléments d'écartement (2.2) les uns par rapport aux autres varie lors d'un mouvement d'inclinaison (BG) de la structure flexible (1.1).

11. Composant structurel (1, 1') selon l'une quelconque des revendications précédentes, dans lequel l'élément de surface supérieur (3.1) et l'élément de surface inférieur (3.2) sont chacun formés d'un matériau flexible et/ou d'une épaisseur de matériau tels que ceux-ci peuvent chacun être fléchis ou inclinés d'au moins 90 degrés selon un rayon défini.

12. Utilisation d'un composant structurel (1, 1') selon l'une quelconque des revendications précédentes en tant que composant mobile, notamment porte mobile, cloison de séparation réglable, siège réglable (S) avec ou sans contour réglable, siège (S) à contour réglable, unité d'affichage mobile (10), écran mobile, table réglable (12), accoudoir réglable, lampe réglable (4).

13. Composant de siège, notamment dossier ou partie d'assise, le composant de siège comprenant au moins :
- une structure porteuse,
- un rembourrage et/ou un élément de revêtement, et
- un élément structurel (1, 1') selon l'une quelconque des revendications 1 à 11 précédentes.

14. Composant de siège selon la revendication 13, dans lequel le composant structurel (1, 1'), notamment l'élément de surface supérieur (3.1), est couplé en mouvement au rembourrage et/ou à l'élément de revêtement.

15. Composant de siège selon la revendication 13 ou 14, dans lequel le composant structurel (1, 1') est agencé entre la structure porteuse et le rembourrage et/ou l'élément de revêtement.

16. Siège (S), comprenant au moins deux composants de siège mobiles l'un par rapport à l'autre, dont au moins l'un des composants de siège comprend un composant structurel (1, 1') selon l'une quelconque des revendications 1 à 11.
